# FASCICULE DE BREVET EUROPEEN

(11) **EP 0 638 756 B1**
(45) Date de publication et mention de la délivrance du brevet: **08.01.1997**
(21) Numéro de dépôt: 94460026.1
(22) Date de dépôt: 22.07.1994
(51) Int. Cl.: F16L 55/033

(54) **Dispositif de montage d'un tube sur un support**
Vorrichtung zum Montieren eines Rohres auf einem Träger
Device for mounting a tube on a support

(30) Priorité: 05.08.1993 FR 9309843
(43) Date de publication de la demande: 15.02.1995
(73) Titulaire: AUTOMOBILES PEUGEOT, 75116 Paris (FR); AUTOMOBILES CITROEN, 92200 Neuilly-sur-Seine (FR)
(72) Inventeur: Le Fol, Marcel, F-35410 Domloup (FR)
(74) Mandataire: Le Faou, Daniel

(56) Documents cités:
- EP-A- 0 490 157
- EP-A- 0 508 085

## Description

La présente invention concerne un dispositif de montage d'un tube (ou plusieurs tubes) sur un support, et plus particulièrement un dispositif de montage permettant de réduire efficacement la transmission des vibrations entre le (ou les) tube(s) et le support, et corrélativement de réduire le bruit engendré par les vibrations.

Comme exemple non limitatif d'application de l'invention, on peut citer le montage de tubes hydrauliques sur la structure d'un véhicule automobile, par exemple la fixation des tuyauteries du circuit de freinage à la caisse du véhicule.

De manière traditionnelle, un dispositif de montage de ce genre comprend une pince composée de deux coquilles articulées aptes à enserrer et retenir un ou plusieurs tubes, l'une de ces coquilles - dite fixe - étant solidaire d'un socle muni d'un organe de fixation au support.

On connaît, par le document EP-A-0 490 157, un dispositif de ce type conçu pour amortir les vibrations auxquelles sont soumis les tubes emprisonnés dans les coquilles. Pour cela, il est prévu à l'intérieur des coquilles un second ensemble de coquilles en matériau souple et élastique et à structure particulière, pourvues de demi-empreintes de forme complémentaire de celle des tubes, conformées pour venir enserrer ces derniers.

De manière générale, ce dispositif connu donne satisfaction. Cependant il est encore perfectible car il laisse passer certaines vibrations, notamment les vibrations qui ont une fréquence égale ou voisine de la fréquence propre des coquilles.

C'est pourquoi l'objectif de la présente invention est d'améliorer les capacités d'absorption des vibrations de ce dispositif connu, et par conséquent d'en réduire encore les nuisances sonores, ceci par des moyens simples et peu coûteux.

Cet objectif est atteint, conformément à l'invention, grâce au fait que le dispositif comporte deux moyens amortisseurs de vibration qui assurent un double filtrage acoustique entre le tube et le support.

Le premier de ces moyens, comme dans le dispositif selon EP-A-0 490 157, est intercalé entre le tube et les coquilles.

Le second moyen est intercalé entre la coquille fixe et le socle.

Dans un mode de réalisation préférentiel de l'invention, ces moyens amortisseurs de vibrations sont des masses en matière élastomère (caoutchouc synthétique ou naturel), les masses constitutives du premier moyen présentant des demi-empreintes en forme de gouttières, complémentaires d'une demi-section du tube.

Avantageusement, les deux coquilles et le socle sont des éléments en matière thermoplastique moulée, rigide ou semi-rigide, sur lesquelles les masses en matière élastomère sont rapportées par surmoulage.

Par ailleurs, selon un certain nombre de caractéristiques avantageuses, mais non limitatives de l'invention :
- les deux coquilles sont réalisées dans une pièce unique possèdant une zone déformable formant charnière d'articulation des coquilles ;
- les deux coquilles sont des pièces distinctes reliées l'une à l'autre par un système d'accrochage articulé ;
- le dispositif comporte des organes de clipage aptes à assurer le verrouillage automatique de la pince en position fermée ;
- la masse élastomère constitutive du second moyen amortisseur de vibrations se présente sous la forme d'une couche d'épaisseur sensiblement constante, dont l'une des faces adhère à la coquille fixe, et l'autre au socle ;
- le socle consiste en une plaquette dont la face externe est légèrement concave, de telle sorte que lors de sa fixation sur un support plan elle est soumise à une légère contrainte à la flexion ;
- l'organe de fixation du socle sur son support consiste en un téton tronconique fendu apte à se cliper dans un trou du support.

Dans un mode de réalisation possible le dispositif est prévu pour permettre le montage de plusieurs tubes sur le support par exemple, de deux tubes, les masses élastomères constitutives du premier moyen amortisseur de vibrations comprenant plusieurs empreintes parallèles conformées chacune pour retenir l'un des tubes.

D'autres caractéristiques et avantages de l'invention apparaîtront de la description et des dessins annexés qui en représentent des modes de réalisation particuliers.

Sur ces dessins :
- la figure 1 est une vue de dessous du dispositif faisant l'objet du premier mode de réalisation, ce dispositif étant à l'état refermé sur une paire de tubes ;
- la figure 2 est une vue de face du dispositif de la figure 1, à l'état ouvert ;
- la figure 3 est une vue de face en coupe transversale du dispositif de la figure 1, le plan de coupe étant référencé III-III sur cette figure ;
- la figure 4 est une vue de détail du dispositif, coupé par le plan longitudinal référencé IV-IV à la figure 3 ;
- la figure 5 est une vue partielle, en coupe transversale, d'un autre mode de réalisation du dispositif ;
- la figure 6 est une vue analogue à la figure 4 qui représente une variante possible du système de clipage assurant le verrouillage des coquilles en position fermée.

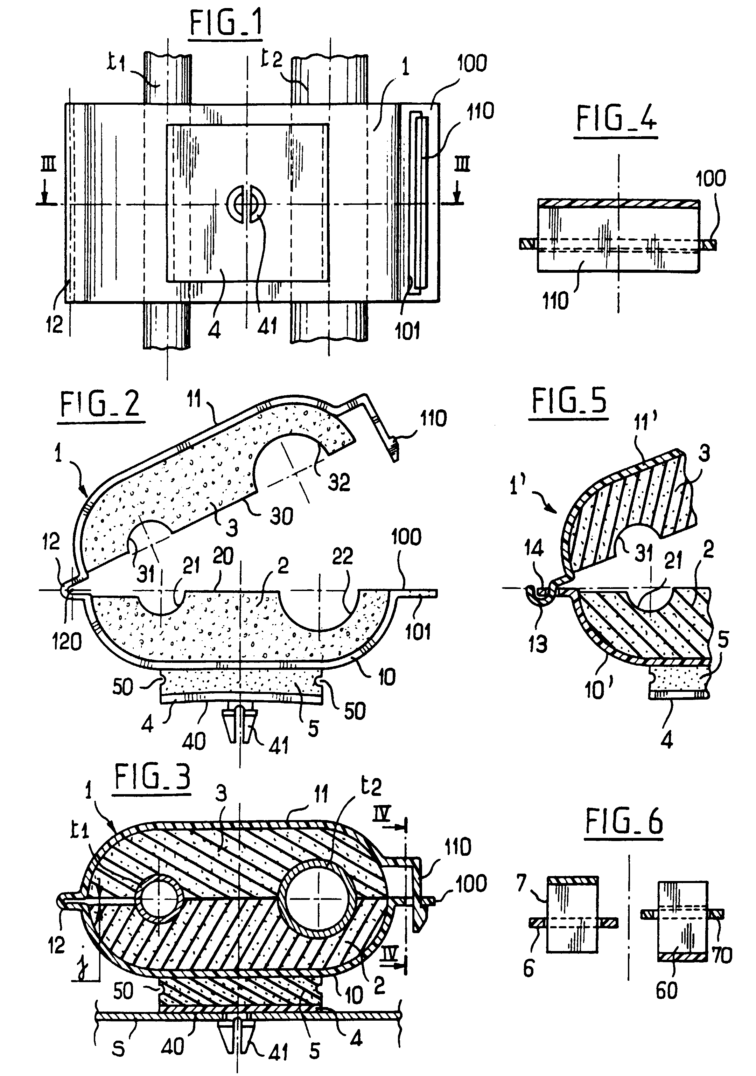

Le dispositif représenté sur les figures 1 à 3 est destiné au montage d'une paire de tubes cylindriques, de diamètres différents, sur un support.

Les tubes, référencés t₁ et t₂, sont par exemple des tubes cylindriques métalliques dans lesquels circule un fluide hydraulique soumis à des coups de bélier occasionnés par des variations brusques de pression, par exemple dans le circuit de freinage d'un véhicule automobile.

Le support S fait partie de la caisse du véhicule.

Ce dispositif comprend une pince 1 qui est composée de deux coquilles 10 et 11. Chacune de ces coquilles consiste en une plaquette cintrée de telle manière qu'en coupe transversale elle présente un contour demi-ovale, formé de deux quarts de cercle reliés par une portion droite.

Les coquilles 10 et 11 sont réalisées dans une pièce unique en matière thermoplastique, moulée par injection, les deux coquilles étant reliées par une zone 12 déformable élastiquement. Cette zone forme une charnière d'articulation des coquilles l'une par rapport à l'autre, l'axe d'articulation virtuel étant référencé 120 à la figure 2.

Du côté opposé à la charnière 12, l'une 10 des coquilles - conventionnellement appelée coquille fixe - se prolonge par une patte 100 coudée vers l'extérieur, dans le plan de joint des deux coquilles. Cette patte 100 est traversée par une ouverture allongée 101, dont le grand côté est parallèle à l'axe d'articulation 120, qui correspond à la direction longitudinale du dispositif, c'est-à-dire à la direction des tubes t₁ et t₂.

L'autre coquille 11 - appelée coquille mobile - se prolonge par une patte 110 munie d'un bec d'accrochage apte à venir se cliper (par déformation élastique) dans l'ouverture 101 de la patte 100 afin de maintenir les coquilles en position fermée.

A l'intérieur de chaque coquille 10, 11 est logée et fixée une garniture souple et élastique 2, respectivement 3, qui consiste en une masse de matière élastomère (caoutchouc synthétique ou naturel).

On a désigné par les références 20 et 30 les faces du plan de joint des garnitures 2, respectivement 3, qui viennent s'appliquer l'une contre l'autre quand la pince 1 se trouve à l'état fermé (voir figure 3).

Chacune desdites faces 20 et 30 est creusée d'une paire de demi-empreintes 21-22 et, respectivement, 31-32, qui ont la forme de gouttières semi-cylindriques de diamètre correspondant à celui des tubes t₁ et t₂ respectivement.

Ainsi, quand la pince est fermée, chacun des tubes t₁ et t₂ se trouve emprisonné et fermement maintenu contre les empreintes 21-31 et, respectivement 22-32, au sein de la garniture 2, 3 en matériau élastomère.

La coquille 10 est fixée par sa face externe, dans sa région centrale, à un socle 4 de forme carrée ou rectangulaire.

Selon une caractéristique essentielle de l'invention, ce montage se fait avec intercalation d'une couche amortisseuse également en matériau élastomère 5. La couche 5 a une épaisseur sensiblement constante et un contour qui correspond à celui du socle 4.

Le socle 4 consiste en une plaquette en matière thermoplastique moulée. Elle porte en son centre un organe de fixation 41 qui consiste en un téton tronconique fendu.

Ce téton est adapté pour venir se loger dans une ouverture prévue dans le support S par clipage, comme cela est illustré à la figure 3.

De préférence, la face externe 40 (face située du côté du téton 41) est légèrement incurvée, concavité dirigée vers l'extérieur, comme cela est visible à la figure 2.

Grâce à cette configuration, lorsque le socle est fixé contre un support S plan, il se déforme élastiquement pour prendre une forme plane ; il se trouve ainsi mis sous contrainte à la flexion, ce qui assure une pression d'appui du socle contre le support, réalisant un montage sans jeu du dispositif sur le support.

Dans le mode de réalisation représenté, il est prévu sur les deux chants latéraux longitudinaux du tampon amortisseur 5 des gorges semi-cylindriques 50 qui améliorent encore l'élasticité de l'ensemble socle 4 - couche 5.

Pour fabriquer un tel dispositif, on commence par mouler par injection les pièces thermoplastiques 1 et 4.

On les place ensuite dans un moule, où elles jouent le rôle d'inserts. La pièce 1 est introduite dans le moule de telle sorte que les deux coquilles se trouvent dans la position semi-ouverte illustrée à la figure 2, l'angle d'ouverture étant suffisant pour permettre l'introduction ultérieure des deux tubes t₁ et t₂, sans forcer, à l'intérieur du dispositif.

Après mise en place des inserts 1 et 4, on injecte l'élastomère dans le moule, de manière à former les garnitures 2, 3 et 5.

Les garnitures 2 et 3 viennent adhérer chacune à une coquille 10, respectivement 11, tandis que l'élément 5 vient adhérer à la coquille fixe 10 et au socle 4.

De préférence, au voisinage de la zone charnière 12, les faces externes des garnitures 2 et 3 se trouvent légèrement en retrait par rapport au plan de joint 20 et 30, de manière à ménager un jeu j lorsque la pince est refermée sur les tubes (voir figure 3). Ainsi on est assuré que la pince se referme complètement et que chaque tube soit parfaitement retenu par les garnitures 2, 3.

Ce dispositif agit comme un double filtre acoustique.

Les moyens amortisseurs de vibrations 2 et 3 d'une part et 5 de l'autre ont des fréquences propres très différentes, si bien que la quasi totalité des vibrations générées à l'intérieur des tubes va être amortie soit par l'un soit par l'autre, soit par les deux moyens amortisseurs à la fois.

Le dispositif est d'un prix de revient faible et d'une mise en place très aisée, permettant une simplification du montage des tubes sur une structure. L'emploi de matériaux élastomère et thermoplastique garantit la tenue du dispositif aux agents corrosifs, notamment au brouillard salin.

Dans le mode de réalisation partiellement représenté à la figure 5, les deux coquilles constitutives de la pince, référencées 1', sont des pièces distinctes. L'articulation par une zone formant charnière est ici remplacée par un système d'accrochage articulé. A cet effet, la coquille fixe 10' est munie d'une patte 14 percée d'une ouverture dans laquelle pénètre une languette arquée 13, formant crochet, solidaire de la coquille mobile 11'. Bien entendu, cette disposition pourrait être inversée, la languette arquée en forme de crochet pouvant être prévue sur la partie fixe et la patte d'accrochage sur la partie mobile. On pourrait également prévoir un double accrochage au moyen d'une paire de pattes et d'une paire de crochets disposés en alternance, de manière inversée, sur les deux pièces.

Dans la variante des moyens de clipage assurant le verrouillage de la pince en position fermée, qui est illustrée à la figure 6, il est prévu deux moyens de clipage.

Chaque coquille 10, 11 porte une paire d'organes de clipage, l'un mâle et l'autre femelle, décalés en direction longitudinale.

Ainsi, la coquille 10 porte une patte 6 traversée par une ouverture dans laquelle s'engage un crochet 7 solidaire de la coquille mobile 11. La coquille 10 porte également un crochet 60 qui s'engage dans l'ouverture d'une patte 70 solidaire de la coquille 11. On obtient ainsi un double clipage, ce qui améliore encore la fiabilité du montage.

## Revendications

1. Dispositif de montage d'un tube sur un support, qui comprend une pince (1) composée de deux coquilles (10, 11) articulées aptes à enserrer et retenir le tube, l'une (10) de ces coquilles, dite fixe, étant solidaire d'un socle (4) muni d'un organe (41) de fixation audit support (S), comportant deux moyens amortisseurs de vibrations assurant un double filtrage acoustique entre le tube et le support, un premier moyen (2, 3) étant intercalé entre le tube et les coquilles (10, 11), tandis qu'un second moyen (5) est intercalé entre la coquille fixe (10) et le socle.

2. Dispositif selon la revendication 1, caractérisé par le fait que lesdits moyens amortisseurs de vibrations sont de masses (2, 3 ; 5) en matière élastomère, les masses (2, 3) constitutives du premier moyen présentant des demi-empreintes en forme de gouttières, complémentaires d'une demi-section du tube.

3. Dispositif selon la revendication 2, caractérisé par le fait que les deux coquilles (10, 11) et le socle (4) sont des éléments en matière thermoplastique moulée, sur lesquels les masses (2, 3 ; 5) en matière élastomère sont rapportées par surmoulage.

4. Dispositif selon l'une des revendications 1 à 3, caractérisé par le fait que les deux coquilles (10, 11) sont réalisées dans une pièce unique possèdant une zone déformable (12) formant charnière d'articulation des coquilles.

5. Dispositif selon l'une des revendications 1 à 3, caractérisé par le fait que les deux coquilles (10', 11') sont des pièces distinctes reliées l'une à l'autre par un système d'accrochage articulé (13, 14).

6. Dispositif selon l'une des revendications 1 à 5, caractérisé par le fait qu'il comporte des organes de clipage (110, 101) aptes à assurer le verrouillage automatique de la pince en position fermée.

7. Dispositif selon l'une des revendications 2 à 6, caractérisé par le fait que la masse élastomère (5) constitutive du second moyen amortisseur de vibrations se présente sous la forme d'une couche d'épaisseur sensiblement constante, dont l'une des faces adhère à la coquille fixe (10), et l'autre au socle (4).

8. Dispositif selon la revendicaton 7, caractérisé par le fait que le socle (4) consiste en une plaquette dont la face externe (40) est légèrement concave, de telle sorte que lors de sa fixation sur un support plan (S) elle est soumise à une légère contrainte à la flexion.

9. Dispositif selon l'une des revendications 1 à 8, caractérisé par le fait que l'organe de fixation du socle (4) sur son support (S) consiste en un téton tronconique fendu (41) apte à se cliper dans un trou du support.

10. Dispositif selon l'une des revendications 2 à 9, caractérisé par le fait que les masses élastomères (2, 3) constitutives du premier moyen amortisseur de vibrations comprennent plusieurs empreintes parallèles (21-31, 22-32) conformées chacune pour retenir un tube (t₁, t₂).

## Patentansprüche

1. Vorrichtung zum Montieren eines Rohres auf einem Träger, enthaltend eine aus zwei gelenkig verbundenen Halbschalen (10, 11) gebildete Zange (1), welche das Rohr einspannen und festhalten kann, wobei eine der Halbschalen (10), welche als fest bezeichnet wird, dauerhaft mit einem Sockel (4) verbunden ist, welcher ein Organ (41) für die Befestigung an diesem Träger (S) aufweist, und weiter enthaltend zwei Mittel für die Dämpfung von Vibrationen, welche eine doppelte akustische Filterung zwischen dem Rohr und dem Träger gewährleisten, wobei ein erstes Mittel (2, 3) zwischen das Rohr und die Halbschalen (10, 11) eingeschoben ist, während ein zweites Mittel (5) zwischen der festen Halbschale (10) und dem Sockel angeordnet ist.

2. Vorrichtung nach Anspruch 1,
**dadurch gekennzeichnet, daß** die Mittel für die Dämpfung von Vibrationen aus einem Elastomer bestehende Massen (2, 3; 5) sind, wobei die das erste Mittel bildenden Massen (2, 3) halbe Vertiefungen in Form von Rillen aufweisen, welche mit dem halben Querschnitt des Rohres übereinstimmen.

3. Vorrichtung nach Anspruch 2,
**dadurch gekennzeichnet, daß** die beiden Halbschalen (10, 11) und der Sockel (4) Elemente aus einem vergossenen thermoplastischen Material sind, auf die die aus einem Elastomer bestehenden Massen (2, 3; 5) aufgegossen sind.

4. Vorrichtung nach einem der Ansprüche 1 bis 3,
**dadurch gekennzeichnet, daß** die beiden Halbschalen (10, 11) aus einem einzigen Teil hergestellt sind, welches einen verformbaren Abschnitt (12) aufweist, welcher ein Scharnier für die gelenkige Verbindung der Halbschalen bildet.

5. Vorrichtung nach einem der Ansprüche 1 bis 3,
**dadurch gekennzeichnet, daß** die beiden Halbschalen (10', 11') getrennte Teile bilden, welche untereinander mit Hilfe eines angelenkten Befestigungssystems (13, 14) verbunden sind.

6. Vorrichtung nach einem der Ansprüche 1 bis 5,
**dadurch gekennzeichnet, daß** sie Klemmittel (110, 101) aufweist, welche für eine automatische Verriegelung der Zange in der geschlossenen Position sorgen.

7. Vorrichtung nach einem der Ansprüche 2 bis 6,
**dadurch gekennzeichnet, daß** die aus einem Elastomer bestehende Masse (5), welche das zweite Mittel für die Dämpfung von Vibrationen bildet, die Form einer Schicht mit weitgehend konstanter Dicke hat, und daß eine ihrer Flächen an der festen Halbschale (10) und ihre andere Fläche an dem Sockel (4) anhaftet.

8. Vorrichtung nach Anspruch 7,
**dadurch gekennzeichnet, daß** der Sockel (4) aus einer Scheibe besteht, deren Außenfläche (40) leicht konkav ausgebildet ist, so daß sie bei ihrer Befestigung an einem ebenen Träger (S) einer leichten Biegespannung unterzogen wird.

9. Vorrichtung nach einem der Ansprüche 1 bis 8,
**dadurch gekennzeichnet, daß** das Element für die Befestigung des Sockels (4) an seinem Träger (S) aus einem stumpfkegeligen Splintzapfen (41) besteht, welcher in einer Bohrung des Trägers einrasten kann.

10. Vorrichtung nach einem der Ansprüche 2 bis 9,
**dadurch gekennzeichnet, daß** die aus einem Elastomer bestehenden Massen (2, 3), welche das erste Mittel für die Dämpfung von Vibrationen bilden, eine Vielzahl von parallelen Vertiefungen (21-31, 22-32) aufweisen, welche jeweils so ausgestaltet sind, daß sie ein Rohr (t₁, t₂) festhalten können.

## Claims

1. Device for mounting a pipe on a support, which comprises a clamp (1) composed of two hinged shells (10, 11) capable of gripping around the pipe and retaining it, one (10) of these shells, called the fixed shell, being fastened to a base (4) provided with a member (41) for attachment to the said support (S), the device including two vibration-damping means ensuring double acoustic filtering between the pipe and the support, a first means (2, 3) being inserted between the pipe and the shells (10, 11) while a second means (5) is inserted between the fixed shell (10) and the base.

2. Device according to Claim 1, characterized in that the said vibration-damping means are masses (2, 3; 5) of elastomeric material, the masses (2, 3) making up the first means having gutter-shaped half-cavities that complement a half-section of the pipe.

3. Device according to Claim 2, characterized in that the two shells (10, 11) and the base (4) are elements made of moulded thermoplastic to which the masses (2, 3; 5) made of elastomeric material are added by overmoulding.

4. Device according to one of Claims 1 to 3, characterized in that the two shells (10, 11) are made from a single piece having a deformable region (12) forming the articulation hinge of the shells.

5. Device according to one of Claims 1 to 3, characterized in that the two shells (10', 11') are separate pieces connected to each other by an articulated catching system (13, 14).

6. Device according to one of Claims 1 to 5, characterized in that it includes snap-fastening members (110, 101) capable of automatically locking the clamp in the closed position.

7. Device according to one of Claims 2 to 6, characterized in that the elastomeric mass (5) making up the second vibration-damping means is in the form of a layer having a substantially constant thickness, one of the faces of which adheres to the fixed shell (10) and the other to the base (4).

8. Device according to Claim 7, characterized in that the base (4) consists of a plate, the external face (40) of which is slightly concave such that, when attaching it to a plane support (S), it is subjected to a slight bending stress.

9. Device according to one of Claims 1 to 8, characterized in that the member for attaching the base (4) to its support (S) consists of a split frustoconical stud (41) capable of snap-fastening in a hole in the support.

10. Device according to one of Claims 2 to 9, characterized in that the elastomeric masses (2, 3) making up the first vibration-damping means comprise several parallel cavities (21-31, 22-32), each shaped so as to retain a pipe (t₁, t₂).
